Europäisches Patentamt

European Patent Office

Office européen des brevets

(19)

(11) Veröffentlichungsnummer : **0 461 080 A1**

(12) # EUROPÄISCHE PATENTANMELDUNG

(21) Anmeldenummer : 91810432.4

(22) Anmeldetag : 07.06.91

(51) Int. Cl.⁵ : **H02G 1/12**

(30) Priorität : 07.06.90 DE 9006400 U

(43) Veröffentlichungstag der Anmeldung :
**11.12.91 Patentblatt 91/50**

(84) Benannte Vertragsstaaten :
**AT CH DE FR GB IT LI SE**

(71) Anmelder : **Geisser, Carl**
**Letzigraben 156**
**CH-8047 Zürich (CH)**

(72) Erfinder : **Geisser, Carl**
**Letzigraben 156**
**CH-8047 Zürich (CH)**

(74) Vertreter : **Münch, Otto et al**
**Patentanwalts-Bureau Isler AG,**
**Stampfenbachstrasse 48**
**CH-8006 Zürich (CH)**

(54) **Abisolierzange.**

(57)    Zwei gezahnte Greifer (23) fixieren das Kabelende hinter dem abzuisolierenden Teil. Zwei Messer (19) bewegen sich vorerst radial gegen das Kabelende und durchtrennen die Isolation. Gleichzeitig mit der Radialbewegung der Messer (19) werden zwei sägeförmig gezahnte Schieber (28) gegen die zu entfernende Isolationshülse (26) gepresst. Die beiden Messer (19) wie auch die beiden Schieber (28) bewegen sich gemeinsam in axialer Richtung von den Greifern (23) weg, nachdem die Isolation durchtrennt ist. Die beiden Schieber (28) bewegen sich dabei gleichzeitig quer zur Längsachse gegenläufig, wodurch die abgetrennte Isolationshülse (26) während des Abstreifens gleichzeitig um die eigene Achse gedreht wird, und dadurch die Litzen des Drahtstrangs miteinander verdrillt werden.

Fig. 1

EP 0 461 080 A1

Um Litzendrahtenden in die gebräuchlichen Kabelendhülsen einführen zu können, müssen die abisolierten Litzen miteinander verdrillt werden, so dass die einzelnen Litzen nicht abstehen und beim Einführen in die Endhülse stören können. Gegenwärtig werden die abisolierten Litzen manuell verdillt, nach dem Abisolieren. Abgesehen davon, dass das Verdrillen der abisolierten Litzen von Hand zeitaufwendig und umständlich ist, kann durch die Berührung der Litzen deren Oberflächen verschmutzt werden, wodurch die Leitfähigkeit beeinträchtigt wird.

Der vorliegenden Erfindung liegt die Aufgabe zugrunde, ein Abisolierwerkzeug zu schaffen, welches das Verdrillen der Litzen während dem Abstreifen des abgetrennten Isolierteilstücks bewerkstelligt. Diese Aufgabe wird durch die kennzeichnenden Merkmale des Anspruchs 1 gelöst.

Nachfolgend wird ein Ausführungsbeispiel der Erfindung anhand der Zeichnung erläutert. Darin zeigt:

Fig. 1 eine schematische Darstellung der Funktionsweise der erfindungsgemässen Abisolierzange,

Fig. 2 einen Längsschnitt durch eine Abisolierzange,

Fig. 3 eine vergrösserte Teildarstellung von Fig. 2,

Fig. 4 einen Querschnitt längs der Linie IV-IV in Fig. 3,

Fig. 5 eine perspektivische Darstellung eines Teils der vorderen Partie des Werkzeuges, und

Fig. 6 ein Teilschnitt einer Varinate.

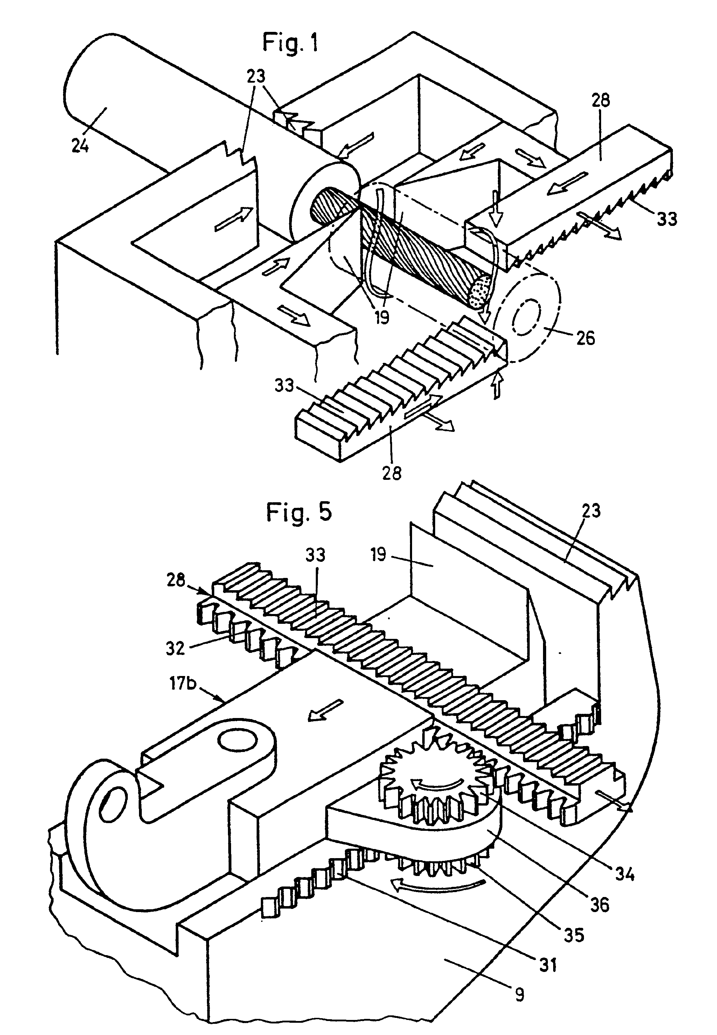

Die schematische Darstellung nach Fig. 1 zeigt die Funktionsweise der Erfindung. Gemäss dieser Darstellung fixieren zwei gezahnte Greifer 23 das Kabelende hinter dem abzuisolierenden Teil. Zwei Messer 19 bewegen sich vorerst radial gegen das Kabelende und durchtrennen die Isolation an der vorgesehenen Trennstelle. Gleichzeitig mit der Radialbewegung der Messer 19 werden zwei sägeförmig gezahnte Schieber 28 gegen die zu entfernende Isolationshülse 26 gepresst. Die beiden Messer 19 wie auch die beiden Schieber 28 bewegen sich gemeinsam in axialer Richtung von den Greifern 23 weg, nachdem die Isolation durchtrennt ist. Die beiden Schieber 28 bewegen sich dabei gleichzeitig quer zur Längsachse gegenläufig, wodurch die abgetrennte Isolationshülse 26 während des Abstreifens gleichzeitig um die eigene Achse gedreht wird, und dadurch die Litzen des Drahtstrangs miteinander verdrillt werden.

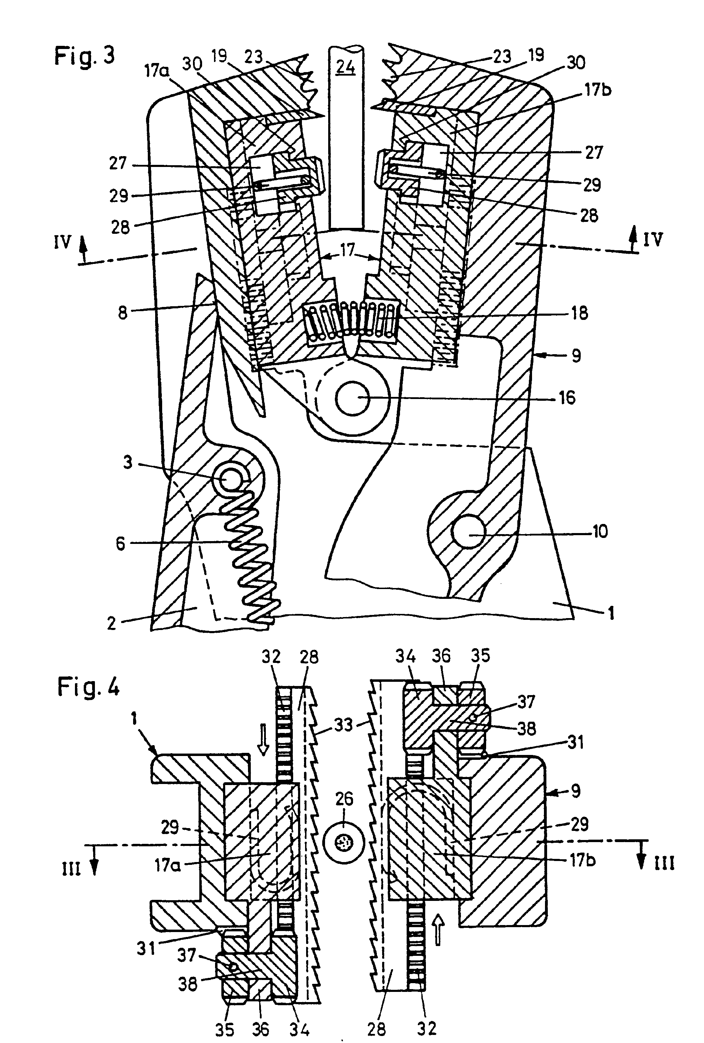

Das Werkzeug zum Abisolieren und Verdrillen der Litzen gemäss Fig. 2 hat einen Haupthebel 1, einen Nebenhebel 2, der mittels eines Bolzens 3 gelenkig mit dem Haupthebel 1 verbunden ist, und einen Gelenkhebel 4, welcher mittels eines Bolzens 5 gelenkig mit dem Nebenhebel 2 verbunden ist. Der Nebenhebel 2 ist mittels einer vorgespannten Zugfeder 6, welche zwischen dem Bolzen 3 und einer Oese 7 des Gelenkhebels 4 eingehängt ist, gegenüber dem Haupthebel 1 in die in Fig. 2 dargestellte gespreizte Grundstellung gegen einen Anschlag 8 vorbelastet. Ein Backenhebel 9 ist mittels eines Bolzens 10 gelenkig mit Haupthebel 1 verbunden. Am einen Ende ist der Backenhebel 9 als Rampe 11 ausgebildet. Am Gelenkhebel 4 ist am inneren Ende eine Rolle 12 mittels eines Bolzen 13 drehbar angebracht. Diese Rolle 12 steht einerseits in Berührung mit der Rampe 11 und andererseits mit einer an einer Schieberplatte 14 drehbar gelagerter Rolle 15. Am vorderen Teil der Schieberplatte 14 ist mittels eines weiteren Bolzens 16 eine Klammer 17 beweglich angebracht. Die Klammer 17 besteht aus zwei Schenkeln 17a, 17b, welche gegeneinander beweglich sind und mit einer Feder 18 gegen Längsführungsflächen im Haupthebel 1 bzw. im Backenhebel 9 gedrückt werden. Am äussersten Ende der Klammerschenkel 17a, 17b ist je ein Messer 19 befestigt zum Durchtrennen der Kabelisolation. Die Schieberplatte 14 weist hinten eine Verlängerung 20 auf, welche in eine Führung 21 ragt, die so ausgebildet ist, dass die Schieberplatte 14 in axialer Richtung verschiebbar ist. Die Führung 21 sowie die Verlängerung 20 sind im Querschnitt rechteckig ausgebildet, so dass die Schieberplatte 14 gegen Verdrehen gesichert ist. Die Verlängerung 20 ist von einer vorgespannten Feder 22 umgeben, welche sich einerseits an der Führung 21 und andererseits einer Schulter 31 abstützt. Der Haupthebel 1 und der Backenhebel 9 sind vorne als gezahnte Greifer 23 ausgebildet.

Wird der Nebenhebel 2 in Richtung A betätigt, bewegt sich die Rolle 12 gegen die Rampe 11 und betätigt den Backenhebel 9 soweit in Richtung C, bis die gezahnten Greifer 23 das abzuisolierende Kabelende 24 zwischen sich einklemmen. Gleichzeitig wird auch die Klammer 17 geschlossen und durchtrennt teilweise mittels der beiden Messer 19 die Isolation des Kabelendes 24. Wenn der Nebenhebel 2 weiter in Richtung A bewegt wird, wird der Gelenkhebel 4 durch die Rolle 12 mittels der Rampe 11 gegen die Rolle 15 bewegt und bewegt dadurch die Schieberplatte 14 rückwärts in Richtung D, bis der Anschlag 25 an der Rolle 15 anschlägt. Da die Schieberplatte 14 mittels des Bolzens 16 mit der Klammer 17 verbunden ist, wird diese geschlossen zusammen mit der Schieberplatte 14 nach rückwärts in Richtung D bewegt und vermag so mittels der beiden Messer 19 die durchtrennte Isolationshülse 26 vom Drahtende 24 zu trennen und abzustreifen.

In den beiden Schenkeln 17a und 17b der Klammer 17 ist je eine T-Nut 27 vorgesehen, in welcher je ein quer zur Längsachse beweglicher Schieber 28 verschiebbar geführt ist, wie dies in Figuren 2, 3 und 4 dargestellt ist. Wie in Figuren 3 und 4 ersichtlich, ist je ein geformter Federdraht 29 in den Nuten 27 so gelagert, dass die beiden Schieber 28 gegen die Ansätze 30 der T-Nuten 27 vorbelastet sind. Eine Längsverzahnung 32 ist seitlich an den Schiebern 28, sowie je eine Längsverzahnung 31 seitlich am Haupthebel 1 und am Backenhebel 9 angebracht, welche mit Zahnrädchen 34, 35 kämmen. Die beiden Zahnrädchen 34, 35 sind mittels je einer Achse 37 drehfest verbunden und mit je einem Bolzen 38 gesichert. An den Schenkeln 17a und 17b der Klammer 17 ist je ein Lagerlappen 36 vorgesehen, in welchem die Achse 37 drehbar gelagert ist.

Während der Betätigung des Nebenhebels 2 wird mittels der Greifer 23 das Kabelende festgehalten, und durch die sich schliessende Klammer 17 mittels der beiden Messer 19 die Isolation des Kabelendes 24 durchtrennt. Ausserdem wird die abgetrennte Isolationshülse 26 durch die sägezahnförmige Verzahnung 33 der Schieber gefasst. Da wie vorgängig beschrieben durch die weitere Betätigung des Nebenhebels 2 sich die Klammer 17 gegenüber dem Haupthebel 1 und dem Backenhebel 9 nach rückwärts bewegt, werden die Zahnrädchen 34 durch die Längsverzahnung 31 gedreht, wodurch auch die Zahnrädchen 35 gedreht werden. Durch die Zahnrädchen 35 werden mittels der Längsverzahnung 32 die Schieber 28 gegenläufig bewegt, wodurch die Isolationshülse 26 während des Abstreifens über dem Litzenende um die eigene Achse gedreht wird und so die einzelnen Litzen miteinander verdrillt.

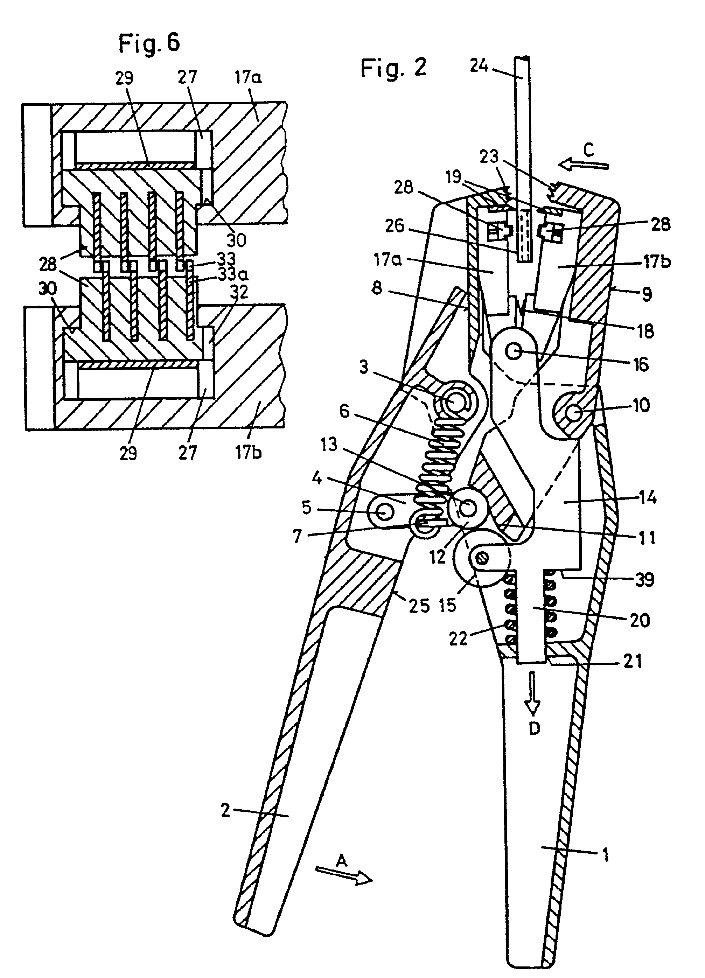

Bei der Ausführungsform nach Fig. 1 bis 5 muss die Höhe der Schieber 28 so gewählt werden, dass sich die Zähne 33 nicht berühren, wenn die Zange leer betätigt wird. Dadurch kann es schwierig werden, sehr dünne Kabel beim Abisolieren zu verdrillen. Die Variante nach Fig. 6 schafft diesbezüglich Abhilfe. Sie zeigt einen Teilschnitt entsprechend Fig. 3, wobei analoge Teile mit gleichen Bezugszeichen versehen sind, so dass sich eine detaillierte Beschreibung dieser Teile erübrigt. Der Teilschnitt nach Fig. 6 ist in der geschlossenen Stellung der Zange dargestellt.

Bei der Variante nach Fig. 6 sind die Schieber 28 breiter und die Federn 29 als Blattfedern ausgebildet. Die Verzahnung 33 wird hier durch in Verschieberichtung der Schieber 28 verlaufende Lamellen 33a gebildet. Die Lamellen 33a des einen Schiebers 28 sind gegenüber den Lamellen 33a des anderen Schiebers 28 quer zu dessen Verschieberichtung versetzt. Die Lamellen 33a können z.B. in die Schieber 28 eingesetzte Abschnitte handelsüblicher Sägeblätter sein. Wie aus Fig. 6 ersichtlich ist, können sich bei dieser Variante die Verzahnungen 33 der beiden Schieber 28 überlappen, wenn die Zange leer betätigt wird, so dass auch sehr dünne Kabel beim Abisolieren zuverlässig verdrillt werden können.

**Patentansprüche**

1. Abisolierzange umfassend einen Haupthebel (1), einen gegenüber dem Haupthebel (1) beweglichen, in die gespreizte Stellung vorbelasteten Nebenhebel (2), zwei am freien Ende der Zange angeordnete Greifer (23), zwei hinter den Greifern (23) angeordnete Messer (19) sowie Getriebeelemente (4,9,11,12,14,15), die derart ausgebildet sind, dass beim Bewegen des Nebenhebels (2) gegen den Haupthebel (1) in einer ersten phase die beiden Greifer (23) und die beiden Messer (19) je gegeneinander bewegt und in einer zweiten Phase die Messer (19) von den Greifern (23) entfernt werden, dadurch gekennzeichnet, dass auf der von den Greifern (23) abgewandten Seite benachbart den Messern (19) zwei gemeinsam mit den Messern (19) bewegliche Schieber (28) angeordnet sind, die einander zugewandt eine griffige Oberfläche (33) aufweisen und quer zur Verschieberichtung der Messer (19) verschiebbar geführt sind, und dass weitere Getriebeelemente (31, 32,34,35) vorhanden sind, welche bei der Verschiebung der Messer (19) relativ zu den Greifern (23) die beiden Schieber (28) gegenläufig verschieben.

2. Abisolierzange nach Anspruch 1, dadurch gekennzeichnet, dass mindestens einer der Schieber (28) in einer T-förmigen Nut (27) geführt und durch eine Feder (29) gegen den anderen Schieber (28) vorbelastet ist.

3. Abisolierzange nach Anspruch 1 oder 2, wobei die beiden Messer (19) an den freien Enden zweier Klammerschenkel (17a,17b) befestigt sind, und wobei der eine Klammerschenkel (17a) am Haupthebel (1) und der andere Klammerschenkel (17b) an einem gegenüber dem Haupthebel (1) schwenkbaren Backenhebel (9) verschiebbar geführt sind, dadurch gekennzeichnet, dass die weiteren Getriebeelemente (31,32,34,35) aus je einer ersten Längsverzahnung (31) am Haupthebel (1) bzw. am Backerhebel (9), je einer zweiten Längsverzahnung (32) an den beiden Schiebern (28) sowie je zwei drehfest miteinander verbundenen, an den Klammerschenkeln (17a,17b) drehbar gelagerten Zahnrädern (34,35) bestehen, von welchen das eine mit der ersten Längsverzahnung (31) und das andere mit der zweiten Längsverzahnung (32) kämmt.

4. Abisolierzange nach einem der Ansprüche 1 bis 3, dadurch gekennzeichnet, dass die griffige Oberfläche der Schieber durch eine weitere Verzahnung (33) gebildet ist.

5. Abisolierzange nach Anspruch 4, dadurch gekennzeichnet, dass die weitere Verzahnung (33) sägezahnförmig ist.

6. Abisolierzange nach einem der Ansprüche 1 bis 5, dadurch gekennzeichnet, dass die beiden Schieber (28) in deren Verschieberichtung verlaufende Lamellen (33a) aufweisen, welche an ihrer dem gegenüberliegenden Schieber (28) zugewandten Schmalfläche die griffige Oberfläche (33) haben, und dass die Lamellen (33a) des einen Schiebers (28) gegenüber den Lamellen (33a) des anderen Schiebers (28) quer zu dessen Verschieberichtung versetzt sind.

7. Abisolierzange nach Anspruch 6, dadurch gekennzeichnet, dass die Lamellen (33a) in die Schieber (28) eingesetzte Abschnitte von Sägeblättern sind.

Fig. 1

23

24

28

33

19

26

33

28

Fig. 5

23

33

19

28

32

17b

34

36

35

31

9

Fig. 3

Fig. 4

EP 0 461 080 A1

Fig. 6

Fig. 2

7

Europäisches
Patentamt

# EUROPÄISCHER RECHERCHENBERICHT

Nummer der Anmeldung

EP    91 81 0432

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-4241628 (SINDELAR ET AL.) <br> * Spalte 5, Zeile 1 - Spalte 13, Zeile 2; Figuren 1-13 * | 1 | H02G1/12 |
| A | | 4 | |
| Y | FR-A-2258727 (HOLDEMA) <br> * Seite 4, Zeile 15 - Seite 10, Zeile 2; Figuren 1-5 * | 1 | |
| A | US-A-4009738 (BABA ET AL.) <br> * Spalte 2, Zeile 24 - Spalte 4, Zeile 54; Figuren 1-8 * | 1 | |
| A | GB-A-2091623 (KABUSHIKI KAISHA NAGOYA) <br> * Seite 1, Zeile 57 - Seite 4, Zeile 125; Figuren 1-9 * | 1, 3, 4 | |
| | | | RECHERCHIERTE SACHGEBIETE (Int. Cl.5) |
| | | | H02G |

Der vorliegende Recherchenbericht wurde für alle Patentansprüche erstellt

| Recherchenort | Abschlußdatum der Recherche | Prüfer |
|---|---|---|
| DEN HAAG | 05 SEPTEMBER 1991 | DEMOLDER J. |